# EUROPEAN PATENT APPLICATION

(11) **EP 4 357 387 A1**
(43) Date of publication of application: **24.04.2024**
(21) Application number: 22861720.5
(22) Date of filing: 24.08.2022
(51) Int. Cl.: C08G 63/02, C08G 63/08, C08G 63/82

(54) **POLY(LACTIC ACID-B-3-HYDROXYPROPIONIC ACID) BLOCK COPOLYMER AND METHOD FOR PREPARATION THEREOF**

(30) Priority: 24.08.2021 KR 20210111934
(71) Applicant: LG Chem, Ltd., Yeongdeungpo-gu Seoul 07336 (KR)
(72) Inventor: JEON, Harim, Daejeon 34122 (KR); CHOI, Jung Yun, Daejeon 34122 (KR); CHOE, Dongcheol, Daejeon 34122 (KR); KIM, Chul Woong, Daejeon 34122 (KR); KIM, Yulliana, Daejeon 34122 (KR); CHO, Suhyun, Daejeon 34122 (KR); JEONG, Yongbok, Daejeon 34122 (KR); LEE, Hokeun, Daejeon 34122 (KR)
(74) Representative: Goddar, Heinz J.
(86) International application number: PCT/KR2022/012678
(87) International publication number: WO 2023/027512

(57) **Abstract**

A poly(lactic acid-b-3-hydroxypropionic acid) block copolymer according to the present invention is characterized in that mechanical properties of the block copolymer are excellent by introducing a lactide optical isomer-derived repeating unit and a poly(3-hydroxypropionic acid) repeating unit at the same time, and accordingly, its application fields may be expanded.

## Description

### [Technical Field]

### Cross-reference to Related Application

The present application is based on, and claims priority from, Korean Patent Application No. 10-2021-0111934, filed on August 24, 2021, the disclosure of which is hereby incorporated by reference herein in its entirety.

The present invention relates to a poly(lactic acid-b-3-hydroxypropionic acid) block copolymer and a preparation method thereof.

### [Background Art]

Polylactic acid (PLA) is a plant-derived resin obtained from plants such as corn, etc., and has received attention as an excellent eco-friendly material due to its biodegradable property. Unlike petroleum-based resins previously used, such as polystyrene resins, polyvinyl chloride resins, polyethylene, etc., polylactic acid has effects of preventing the depletion of petroleum resources and suppressing carbon dioxide emission, etc., and therefore, it can reduce environmental pollution, which is a disadvantage of petroleum-based plastic products. As the environmental pollution problems caused by waste plastics, etc. have emerged as social problems, efforts are being made to expand the range of application of polylactic acid to products where general plastics (petroleum-based resins) have been used, such as food packaging materials and containers, electronic product cases, etc.

However, polylactic acid has poor impact resistance and heat resistance, as compared to existing petroleum-based resins, and thus it has a limited range of application. In addition, its tensile strength is weak and elongation property is poor to exhibit brittleness, and thus polylactic acid has a limitation as a general-purpose resin. In order to improve the above disadvantages, studies have been conducted on a copolymer including other repeating units in polylactic acid. In particular, to improve elongation, 3-hydroxypropionic acid has received attention as a comonomer.

Meanwhile, physical properties of the polylactic acid block are affected by the content and distribution of D-lactic unit (R) and L-lactic unit (S). In particular, the arrangement of respective repeating units may affect crystallinity of PLA. Among lactides existing in nature, L-lactide is dominant, and it is known that thermal and mechanical properties may be controlled by introducing a D-lactic acid repeating unit (D-lactic unit) into PLLA (L-lactic acid 100%). Methods of controlling the content and distribution of the D-lactic unit of the PLA block may include controlling a feed composition of lactide raw materials or controlling a polymerization method. For example, there are methods of controlling the feeding sequence of the lactide raw materials, of using an enantioselective catalyst (specific catalyst), or of inducing a transesterification or racemization reaction in polymerization kinetics. However, the transesterification or racemization reaction mainly proceeds as a side reaction of the ring-opening reaction, and thus there is a problem in that it is difficult to control the reaction.

Accordingly, in the present invention, it is intended to provide a block copolymer with excellent mechanical properties, which has a diblock or triblock structure by simultaneously or sequentially feeding the lactide raw materials, while controlling crystallinity of the PLA block by controlling the D-lactic unit by introducing a meso-lactide or D-lactide-derived repeating unit, which has been considered as an optical impurity, together with a 3-hydroxypropionic acid-derived repeating unit.

### [Disclosure]

### [Technical Problem]

There are provided a block copolymer having excellent mechanical properties while maintaining biodegradability of polylactic acid by including a repeating unit derived from an optical isomer of lactide, and a preparation method thereof.

### [Technical Solution]

To solve the above problem, there is provided a poly(lactic acid-b-3-hydroxypropionic acid) block copolymer including a poly(lactic acid) repeating unit; and a poly(3-hydroxypropionic acid) repeating unit, wherein the poly(lactic acid) repeating unit includes i) a repeating unit derived from a compound represented by the following Formula 1 or a repeating unit derived from a compound represented by the following Formula 2; and ii) a repeating unit derived from a compound represented by the following Formula 3:

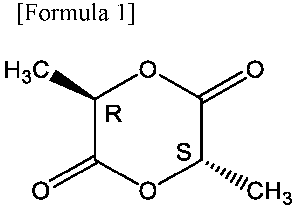

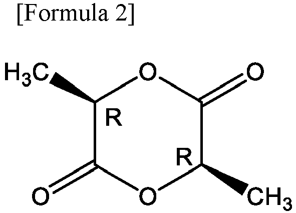

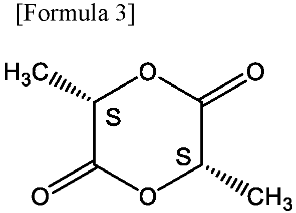

There is also provided a method of preparing a poly(lactic acid-b-3-hydroxypropionic acid) block copolymer, the method including the steps of:
preparing a poly(3-hydroxypropionic acid) (step 1); and
preparing the block copolymer by performing a ring-opening polymerization of a lactide mixture in the presence of a poly(3-hydroxypropionic acid) initiator (step 2),
wherein the lactide mixture includes i) a compound represented by Formula 1 or a compound represented by Formula 2; and ii) a compound represented by Formula 3.

As used herein, the "lactide" includes all types of lactides of L-lactide, D-lactide, and meso-lactide. Further, the "lactide mixture" refers to an optical isomer mixture including two or more selected from the group consisting of L-lactide, D-lactide, and meso-lactide.

Further, as used herein, the "D-lactic unit" refers to the content of the lactic acid repeating unit derived from the D-form of the lactide monomer, based on the total poly(lactic acid) repeating units.

As used herein, the term `poly(lactic acid-b-3-hydroxypropionic acid) block copolymer' is a block copolymer obtained by polymerizing a lactide-derived monomer and a 3-hydroxypropionic acid-derived monomer.

The block copolymer of the present invention include the poly(lactic acid) repeating unit and the poly(3-hydroxypropionic acid) repeating unit. Of them, the poly(lactic acid) repeating unit includes a repeating unit derived from a meso-lactide which is a compound represented by Formula 1 or a repeating unit derived from a D-lactide which is a compound represented by Formula 2, and at the same time, a repeating unit derived from a L-lactide which is a compound represented by Formula 3, among the optical isomers of lactide. Further, the block copolymer is a block copolymer having excellent mechanical properties, in particular, excellent elongation through interaction with the repeating unit derived from 3-hydroxypropionic acid while including the monomer derived from the meso-lactide represented by Formula 1 or D-lactide.

As described above, the meso-lactide is a lactide including each one of D-form and L-form. Lactide forms a poly(lactic acid) through a ring-opening polymerization reaction. It is known that tacticity in the polymerization process varies depending on the type of optical isomers of L-lactide, D-lactide, and meso-lactide. In general, a repeating unit derived from meso-lactide or a repeating unit derived from D-lactide undergoes a ring-opening polymerization to form a lactic acid repeating unit derived from the D-form, respectively. One molecule of meso-lactide forms one L-lactic acid and one D-lactic acid, and one molecule of D-lactide forms two D-lactic acids.

The present inventors have studied the utilization of meso-lactide or D-lactide, which is considered as an optical impurity. As a result, they found that, in the poly(lactic acid-b-3-hydroxypropionic acid) block copolymer including the poly(3-hydroxypropionic acid) repeating unit together with the meso-lactide or D-lactide-derived repeating unit, crystallinity of the poly(3-hydroxypropionic acid) block increases, even though crystallinity of the poly(lactic acid) block decreases, and confirmed that complementary physical properties of the respective blocks are realized, thereby completing the present invention.

Meanwhile, in the present invention, the repeating unit derived from the meso-lactide represented by Formula 1 or the repeating unit derived from the D-lactide represented by Formula 2 may be derived from a pure meso-lactide material or a pure D-lactide material, or may be derived from a meso-lactide and/or D-lactide partially included as an optical isomer in L-lactide, or may be derived from a D-lactide included in a rac-lactide and a meso-lactide partially included as an optical isomer.

Preferably, the repeating unit derived from the compound represented by Formula 1 or the repeating unit derived from the compound represented by Formula 2 is included in an amount of 0.5 parts by weight to 99 parts by weight with respect to 100 parts by weight of the poly(lactic acid) repeating unit. More preferably, the repeating unit derived from the compound represented by Formula 1 is included in an amount of 0.6 parts by weight or more, 0.7 parts by weight or more, 0.8 parts by weight or more, 0.9 parts by weight or more, or 1 part by weight or more, and 95 parts by weight or less, 90 parts by weight or less, 80 parts by weight or less, 70 parts by weight or less, or 60 parts by weight or less with respect to 100 parts by weight of the poly(lactic acid) repeating unit. When the repeating unit derived from the meso-lactide represented by Formula 1 or the repeating unit derived from the D-lactide represented by Formula 2 is included in the above range, the content of the D-lactic unit in the poly(lactic acid) is controlled in an appropriate level, and thus mechanical properties may be maintained even by including the repeating unit derived from meso-lactide or D-lactide while maintaining intrinsic properties of polylactic acid. Meanwhile, a method of calculating/measuring the content of the D-lactic unit will be specified in Example below.

Preferably, a weight average molecular weight of the poly(lactic acid-b-3-hydroxypropionic acid) block copolymer is 10,000 g/mol to 200,000 g/mol. More preferably, the weight average molecular weight of the poly(lactic acid-b-3-hydroxypropionic acid) block copolymer is 15,000 g/mol or more, 20,000 g/mol or more, 25,000 g/mol or more, or 30,000 g/mol or more; and 150,000 g/mol or less, 100,000 g/mol or less, 90,000 g/mol or less, or 80,000 g/mol or less. When the weight average molecular weight of the poly(lactic acid-b-3-hydroxypropionic acid) block copolymer is within the above range, the tensile properties of the P3HP block may be expressed during copolymer polymerization.

Preferably, an ASTM D638 tensile strength of the poly(lactic acid-b-3-hydroxypropionic acid) block copolymer is 1 MPa to 70 MPa. More preferably, the tensile strength of the poly(lactic acid-b-3-hydroxypropionic acid) block copolymer is 1 MPa or more, 2 MPa or more, 3 MPa or more, 4 MPa or more, 5 MPa or more, 6 MPa or more, 7 MPa or more, 8 MPa or more, 9 MPa or more, or 10 MPa or more; and 65 MPa or less, 60 MPa or less, 55 MPa or less, or 50 MPa or less.

Preferably, a tensile elongation according to ASTM D638 of the poly(lactic acid-b-3-hydroxypropionic acid) block copolymer is 5% to 1000%. More preferably, the tensile elongation of the poly(lactic acid-b-3-hydroxypropionic acid) block copolymer is 5% or more, 10% or more, 30% or more, 50% or more, 70% or more, 100% or more, or 120% or more; and 900% or less, 800% or less, 700% or less, or 650% or less.

Meanwhile, the present invention provides a method of preparing a poly(lactic acid-b-3-hydroxypropionic acid) block copolymer, the method including the steps of: preparing a poly(3-hydroxypropionic acid) (step 1); and preparing the block copolymer by performing a ring-opening polymerization of a lactide mixture in the presence of a poly(3-hydroxypropionic acid) initiator (step 2), wherein the lactide mixture includes i) a compound represented by Formula 1 or a compound represented by Formula 2; and ii) a compound represented by Formula 3.

Preferably, a number average molecular weight of the poly(3-hydroxypropionic acid) of the step 1 is 1,000 g/mol to 40,000 g/mol. Further, the number average molecular weight of the poly(3-hydroxypropionic acid) is 2,000 g/mol or more, 3,000 g/mol or more, 3,500 g/mol or more, or 4,000 g/mol or more, and 40,000 g/mol or less, 35,000 g/mol or less, 30,000 g/mol or less, 25,000 g/mol or less, or 20,000 g/mol or less. The 3-hydroxypropionic acid polymer refers to a homopolymer of 3-hydroxypropionic acid, and those prepared by controlling the degree of polymerization may be used. When poly(3-hydroxypropionic acid) of the above range is used, polymerization activity is excellent, which is advantageous in forming the block copolymer with the poly(lactic acid) repeating unit.

Preferably, the compound represented by Formula 1 or the compound represented by Formula 2 is included in an amount of 0.5 parts by weight to 99 parts by weight with respect to 100 parts by weight of the lactide mixture. More preferably, the compound represented by Formula 1 or the compound represented by Formula 2 is included in an amount of 0.6 parts by weight or more, 0.7 parts by weight or more, 0.8 parts by weight or more, 0.9 parts by weight or more, or 11 parts by weight or more, and 95 parts by weight or less, 90 parts by weight or less, 80 parts by weight or less, 70 parts by weight or less, or 60 parts by weight or less with respect to 100 parts by weight of the lactide mixture. When the compound represented by Formula 1 or the compound represented by Formula 2 is included in the above range with respect to 100 parts by weight of the lactide mixture, it is suitable for forming the block copolymer with poly(3-hydroxypropionic acid) while maintaining or improving biodegradability of the polylactic acid.

Preferably, a weight ratio of the poly(3-hydroxypropionic acid) and the lactide mixture in the step 2 is 1:0.5 to 1:20. Further, the weight ratio of the poly(3-hydroxypropionic acid) and the lactide mixture may be 1:1 or more, 1:2 or more, 1:3 or more, 1:4 or more, or 1:5 or more, and 1:15 or less, or 1:10 or less. When the weight ratio of the poly(3-hydroxypropionic acid) and the lactide mixture is within the above range, mechanical properties of the block copolymer may be improved even though the content of the D-lactic unit increases.

Meanwhile, since the preparation method involves the lactide ring-opening polymerization reaction, it is performed in the presence of a lactide ring-opening catalyst. For example, the catalyst may be a catalyst represented by the following Formula 2:

[Formula 2] MA¹ₚA²₂₋ₚ

in Formula 2,
M is Al, Mg, Zn, Ca, Sn, Fe, Y, Sm, Lu, Ti, or Zr,
p is an integer of 0 to 2, and
A¹ and A² are each independently alkoxy or carboxylate.

More specifically, the catalyst represented by Formula 2 may be tin(II) 2-ethylhexanoate (Sn(Oct)₂).

Preferably, the amount of the catalyst used may be 0.001 mole% to 10 mole%, 0.01 mole% to 5 mole%, 0.03 mole% to 1 mole%, regarding that the total number of moles of lactide is 100 mole%.

The ring-opening polymerization may be performed at 150°C to 200°C for 5 minutes to 10 hours.

In addition, the ring-opening polymerization reaction may be performed by bulk polymerization in which a solvent is not substantially used. In this regard, "a solvent is not substantially used" may encompass a case of using a small amount of a solvent for dissolving the catalyst, for example, a case of using a solvent of up to less than 1 ml per 1 kg of the lactide monomer used. As the ring-opening polymerization is performed by bulk polymerization, a process of removing the solvent after polymerization may be omitted, and decomposition or loss of the resin during the process of removing the solvent may also be suppressed. In addition, the poly(lactic acid-b-3-hydroxypropionic acid) block copolymer may be obtained with high conversion rate and yield by the bulk polymerization.

In addition, the polymerization reaction may be performed by melt polymerization or solid-phase polymerization. The melt polymerization may be performed at a temperature of 100°C to 200°C, 150°C to 200°C, or 170°C to 200°C. When the temperature at the time of melt polymerization is lower than 100°C, the catalyst activity may decrease and the formation rate of the polymer may decrease. When the temperature is too high by exceeding 200°C, it is apprehended that the polymer may be thermally deformed. Thus, it is preferable to satisfy the above range. The melt polymerization may be performed under normal pressure, i.e., within a pressure range of 700 Torr to 800 Torr.

Meanwhile, the solid-phase polymerization may be performed under reduced pressure at a relatively low temperature, as compared to that of the melt polymerization. For example, the solid-phase polymerization may be performed at a pressure of 10 Torr or less, 5 Torr or less, 1 Torr or less, or 0.5 Torr or less in the temperature range of 110°C to 170°C, 120°C to 160°C, or 130°C to 150°C.

### [Effect of the Invention]

As described above, a poly(lactic acid-b-3-hydroxypropionic acid) block copolymer according to the present invention is characterized in that mechanical properties of the block copolymer are excellent by introducing a lactide optical isomer-derived repeating unit and a poly(3-hydroxypropionic acid) repeating unit at the same time, and accordingly, its application fields may be expanded.

### [Detailed Description of the Embodiments]

Hereinafter, exemplary embodiments of the present invention will be described in more detail in the following Examples. However, the following Examples are only for illustrating the exemplary embodiments of the present invention, and the content of the present invention is not limited by the following Examples.

### Example

### Preparation Example 1: Preparation of poly(3-hydroxypropionic acid)

For the biosynthesis of high-molecular-weight poly(3-hydroxypropionate) according to the present invention, fermentation was first performed under the following conditions to prepare a fermentation broth containing 3-hydroxypropionate as a fermentation substrate. In detail, *E*. *coli* W3110 having GDH and ALDH enzyme genes was used as a strain for fermentation. M9 was used as a medium, and 3-hydroxypropionate was produced by performing fermentation using 70 g/L of glycerol as a substrate.

The high-molecular-weight poly(3-hydroxypropionate) used in the present invention was obtained through polycondensation of 3-hydroxypropionic acid (3HP). 3-Hydroxypropionic acid (3HP; 60 g) in the aqueous solution was put into a reactor, and the reactor was placed in an oil bath heated to 50°C, and water was dried at 22 torr using a vacuum pump. When the water drying was completed, p-TSA (0.4 wt% relative to 3HP) and SnCh (0.15 wt% relative to 3HP) as catalysts were put, and polycondensation was performed at 90°C and 10 torr for 2 hours, and at 110°C and 0.2 torr for 18 hours to prepare a poly(3-hydroxypropionate). As a result of measuring the relative molecular weight of the prepared P3HP, Mn = 4,384, and Mw = 20,434.

### Example 1: Preparation of poly(lactic acid-b-3-hydroxypropionic acid) diblock copolymer

In a reactor, L-lactide (10 g, L-lactide:99.0%, meso-lactide: 0.7%, D-lactide: 0.3%), poly(3-hydroxypropionate) oligomer (1 g) previously prepared in Preparation Example, and tin(II) ethylhexanoate (9 µl, 0.02 mol% relative to 100 mol% of total lactides) as a catalyst were put, followed by drying for about 30 minutes to 1 hour. Subsequently, the reactor was placed in an oil bath pre-heated to 180°C, and polymerization was performed for 1.5 hours. After the reaction was completed, the reaction product was dissolved in chloroform and extracted with methanol to obtain a block copolymer.

### Example 2: Preparation of poly(lactic acid-b-3-hydroxypropionic acid) diblock copolymer

In a reactor, L-lactide (9 g), meso-lactide (1 g), poly(3-hydroxypropionate) oligomer (1 g) previously prepared in Preparation Example, and tin(II) ethylhexanoate (9 µl, 0.02 mol% relative to 100 mol% of total lactides) as a catalyst were put, followed by drying for about 30 minutes to 1 hour. Subsequently, the reactor was placed in an oil bath pre-heated to 180°C, and polymerization was performed for 1.5 hours. After the reaction was completed, the reaction product was dissolved in chloroform and extracted with methanol to obtain a block copolymer.

### Example 3: Preparation of poly(lactic acid-b-3-hydroxypropionic acid) diblock copolymer

In a reactor, L-lactide (8 g), meso-lactide (2 g), poly(3-hydroxypropionate) oligomer (1 g) previously prepared in Preparation Example, and tin(II) ethylhexanoate (9 µl, 0.02 mol% relative to 100 mol% of total lactides) as a catalyst were put, followed by drying for about 30 minutes to 1 hour. Subsequently, the reactor was placed in an oil bath pre-heated to 180°C, and polymerization was performed for 1.5 hours. After the reaction was completed, the reaction product was dissolved in chloroform and extracted with methanol to obtain a block copolymer.

### Example 4: Preparation of poly(lactic acid-b-3-hydroxypropionic acid) diblock copolymer

In a reactor, L-lactide (5 g), meso-lactide (5 g), poly(3-hydroxypropionate) oligomer (1 g) previously prepared in Preparation Example, and tin(II) ethylhexanoate (9 µl, 0.02 mol% relative to 100 mol% of total lactides) as a catalyst were put, followed by drying for about 30 minutes to 1 hour. Subsequently, the reactor was placed in an oil bath pre-heated to 180°C, and polymerization was performed for 1.5 hours. After the reaction was completed, the reaction product was dissolved in chloroform and extracted with methanol to obtain a block copolymer.

### Example 5: Preparation of poly(lactic acid-b-3-hydroxypropionic acid) diblock copolymer

In a reactor, meso-lactide (10 g, Meso-lactide: 90.7%, L-lactide: 9.0%, D-lactide: 0.3%), poly(3-hydroxypropionate) oligomer (1 g) previously prepared in Preparation Example, and tin(II) ethylhexanoate (9 µl, 0.02 mol% relative to 100 mol% of total lactides) as a catalyst were put, followed by drying for about 30 minutes to 1 hour. Subsequently, the reactor was placed in an oil bath pre-heated to 180°C, and polymerization was performed for 1.5 hours. After the reaction was completed, the reaction product was dissolved in chloroform and extracted with methanol to obtain a block copolymer.

### Example 6: Preparation of poly(lactic acid-b-3-hydroxypropionic acid) diblock copolymer

In a reactor, L-lactide (10 g, L-lactide: 99.0%, meso-lactide: 0.7%, D-lactide: 0.3%), poly(3-hydroxypropionate) oligomer (2 g) previously prepared in Preparation Example, and tin(II) ethylhexanoate (9 µl, 0.02 mol% relative to 100 mol% of total lactides) as a catalyst were put, followed by drying for about 30 minutes to 1 hour. Subsequently, the reactor was placed in an oil bath pre-heated to 180°C, and polymerization was performed for 1.5 hours. After the reaction was completed, the reaction product was dissolved in chloroform and extracted with methanol to obtain a block copolymer.

### Example 7: Preparation of poly(lactic acid-b-3-hydroxypropionic acid) diblock copolymer

In a reactor, L-lactide (8 g), rac-lactide (2 g), poly(3-hydroxypropionate) oligomer (2 g) previously prepared in Preparation Example, and tin(II) ethylhexanoate (9 µl, 0.02 mol% relative to 100 mol% of total lactides) as a catalyst were put, followed by drying for about 30 minutes to 1 hour. Subsequently, the reactor was placed in an oil bath pre-heated to 180°C, and polymerization was performed for 1.5 hours. After the reaction was completed, the reaction product was dissolved in chloroform and extracted with methanol to obtain a block copolymer.

### Example 8: Preparation of poly(lactic acid-b-3-hydroxypropionic acid) diblock copolymer

In a reactor, L-lactide (5 g), rac-lactide (5 g), poly(3-hydroxypropionate) oligomer (2 g) previously prepared in Preparation Example, and tin(II) ethylhexanoate (9 µl, 0.02 mol% relative to 100 mol% of total lactides) as a catalyst were put, followed by drying for about 30 minutes to 1 hour. Subsequently, the reactor was placed in an oil bath pre-heated to 180°C, and polymerization was performed for 1.5 hours. After the reaction was completed, the reaction product was dissolved in chloroform and extracted with methanol to obtain a block copolymer.

### Example 9: Preparation of poly(lactic acid-b-3-hydroxypropionic acid) triblock copolymer

In a reactor, meso-lactide (1 g), poly(3-hydroxypropionate) oligomer (1 g) previously prepared in Preparation Example, and tin(II) ethylhexanoate (9 µl, 0.02 mol% relative to 100 mol% of total lactides) as a catalyst were put, followed by drying for about 30 minutes to 1 hour. Subsequently, the reactor was placed in an oil bath pre-heated to 180°C, and reaction was allowed for 30 minutes. Then, L-lactide (9 g) was added, and polymerization was further performed for 80 minutes. The reaction product was taken from the reactor, and subjected to devolatilization at 140°C under reduced pressure of 1 torr to 5 torr for about 3 hours to remove monomers. Finally, a block copolymer was obtained.

### Example 10: Preparation of poly(lactic acid-b-3-hydroxypropionic acid) triblock copolymer

In a reactor, meso-lactide (5 g), poly(3-hydroxypropionate) oligomer (1 g) previously prepared in Preparation Example, and tin(II) ethylhexanoate (9 µl, 0.02 mol% relative to 100 mol% of total lactides) as a catalyst were put, followed by drying for about 30 minutes to 1 hour. Subsequently, the reactor was placed in an oil bath pre-heated to 180°C, and reaction was allowed for 30 minutes. Then, L-lactide (5 g) was added, and polymerization was further performed for 80 minutes. The reaction product was taken from the reactor, and subjected to devolatilization at 140°C under reduced pressure of 1 torr to 5 torr for about 3 hours to remove monomers. Finally, a block copolymer was obtained.

### Comparative Example 1: Preparation of polylactic acid

In a reactor, L-lactide (20 g), meso-lactide (0 g), 1-octanol (0.036 g, 0.2 mol% to lactide), tin(II) ethylhexanoate (0.0056 g, 0.01 mol% to lactide) as a catalyst, and toluene (45 uL) were put, followed by drying for about 30 minutes to 1 hour. Subsequently, the reactor was placed in an oil bath pre-heated to 180°C, and polymerization was performed for 1.5 hours. The reaction product was taken from the reactor, and subjected to devolatilization at 140°C under reduced pressure of 1 torr to 5 torr for about 3 hours to remove monomers. Finally, a polylactic acid homopolymer was prepared.

### Comparative Example 2: Preparation of polylactic acid

A polylactic acid homopolymer was prepared in the same manner as in Comparative Example 1, except that L-lactide (18 g) and meso-lactide (2 g) were used. After the reaction was completed, the reaction product was dissolved in chloroform and extracted with methanol to obtain a block copolymer.

### Comparative Example 3: Preparation of polylactic acid

A polylactic acid homopolymer was prepared in the same manner as in Comparative Example 1, except that L-lactide (16 g) and meso-lactide (4 g) were used. After the reaction was completed, the reaction product was dissolved in chloroform and extracted with methanol to obtain a block copolymer.

### Comparative Example 4: Preparation of polylactic acid

A polylactic acid homopolymer was prepared in the same manner as in Comparative Example 1, except that meso-lactide (20 g) was used. After the reaction was completed, the reaction product was dissolved in chloroform and extracted with methanol to obtain a block copolymer.

### Comparative Example 5

PLA 2003D which is a Natureworks' product was used. The content of D lactic acid on the Spec sheet is 4.5%.

### Comparative Example 6

PLA 4032D which is a Natureworks' product was used. The content of D lactic acid on the Spec sheet is 1.6%.

The lactides used in Examples and Comparative Examples are as follows:
L-lactide: produced by Jindan, Co., Ltd., China, L-lactide: 99.0%, meso-lactide: 0.7%, D-lactide: 0.3%, acidity: 1.1 mEq/kg
meso-lactide: produced by Natureworks, LLC., M700 grade, meso-lactide: 90.7%, L-lactide: 9.0%, D-lactide: 0.3%, acidity: 12 mEq/kg to 19 mEq/kg
rac-lactide: TCI(Tokyo Industry Chemical co Ltd), racemic lactide (L-lactide: 50%, D-lactide: 50%)

### Experimental Example

Properties of the copolymers prepared in Examples and Comparative Examples were evaluated as follows.

### (1) Weight average molecular weight, Number average molecular weight, and Molecular weight distribution (PDI)

Waters' GPC was used for number average molecular weights, weight average molecular weights, and molecular weight distributions. Chloroform was used as a mobile phase, and relative molecular weights were determined from a calibration curve using PS (standard).

### (2) Tensile strength, Tensile modulus, and Tensile elongation

Dog-bone processing was performed using a hot-press machine (QMESYS, heating plate tester, model: QM900M), and performed at a processing temperature of 20 °C higher than DSC Tm. The neck dimensions of the dog bone were 25.4 mm long, 1 mm thick, and 3 mm wide. The tensile properties were measured according to ASTM D638, and measured at room temperature and a pulling speed of 5 mm/min using Instron's equipment (xx) Universal Testing Systems (UTM).

### (3) D-lactic unit(%)

The content of D-lactic unit (%) in the polymer was calculated through Equation 1 below by measuring a specific optical rotation of a polarimeter. As the polarimeter, JASCO's P-2000 polarimeter (D light source used, measurement temperature: 25°C) was used. D-lactic unit(%)=[[α]D25PLLA * {1-(y/100)}-[α]D25sample]/[2*[α]D25PLLA*{1-(y-100)}] * 100 in Equation 1,
[α]_{D}²⁵_{PLLA} is -156,
[α]_{D}²ₛₐₘₚₗₑ is calculated through (α×100)/(l×C) (α: optical rotation (degree), l: cell length (decimeter, length of glass cell used: 1 dm), C: 1 g/dL, 1 w/v%, Chloroform), and
y is % by weight of the poly(3-hydroxypropionic acid)block in the block copolymer.

Meanwhile, y is measured using 1H-NMR after dissolving the polymer resin in chloroform, and calculated through Equation 2. y(%)=A(P(3HP), 2H, 4.15 ppm) / {2 * A(PLA, 1H, 5.15 ppm) + A(P(3HP), 2H, 4.15 ppm)} * 100 in Equation 2,
A(P(3HP), 2H, 4.15 ppm) is attributed to 2H of P3HP, and is an area at 4.15 ppm on NMR,
A(PLA, 1H, 5.15 ppm) is attributed to 1H of PLA, and is an area at 5.15 ppm on NMR.

### (4) Differential Scanning Calorimetry

Tg, Tc, Tm, △H_{c}, and △Hₘ of polylactic acid and Tg, Tc, Tm, and △Hₘ of poly(3-hydroxypropionic acid) were measured using a differential scanning calorimeter (DSC, manufacturer: Mettler Toledo) by the following method.

The polymer was heated to 220°C, and then maintained for 5 minutes, the temperature was lowered to -70°C to remove the heat history. Then, the polymer was heated to 220°C again to obtain melting temperature (Tm) and melting enthalpy (ΔH) from the peak in the secondary heating. At this time, the heating and cooling rates were adjusted to 10 °C/min, respectively.

The measurement results are shown in Tables 1 and 2.

**[Table 1]**

| | GPC | | | UTM | | | Polarimeter | |
|---|---|---|---|---|---|---|---|---|
| | Mn (g/mol) | Mw (g/mol) | PDI | Tensile strength (MPa) | Tensile modulus (GPa) | Tensile elongation (%) | [α]₂₅^{D} | D-lactic unit (%) in PLA block |
| Example 1 | 63,891 | 161,799 | 2.5 | 49.0 | 1.72 | 5.8 | -139 | 0.6 |
| Example 2 | 55,517 | 123,748 | 2.2 | 49.0 | 1.79 | 5.1 | -125 | 5.4 |
| Example 3 | 61,137 | 146,485 | 2.4 | 37.0 | 1.85 | 14.6 | -109 | 11.3 |
| Example 4 | 37,581 | 90,955 | 2.42 | 3.5 | 0.22 | 177.0 | -73 | 24.1 |
| Example 5 | 39,782 | 75,764 | 1.9 | 2.4 | 0.38 | 729.1 | -12 | 45.8 |
| Example 6 | 37,467 | 74,054 | 2.0 | 24.3 | 0.97 | 41.0 | -123 | 0.6 |
| Example 7 | 44,001 | 67,793 | 1.5 | 10.2 | 0.46 | 143.4 | -96 | 11.5 |
| Example 8 | 36,614 | 65,321 | 1.8 | 11.1 | 0.57 | 179.2 | -60 | 26.0 |
| Example 9 | 44,237 | 93,200 | 2.1 | 27.2 | 1.99 | 1.6 | -126 | 5.1 |
| Example 10 | 50,293 | 105,326 | 2.09 | 47.0 | 2.38 | 6.7 | -71 | 24.7 |
| Comparative Example 1 | 218,943 | 324,113 | 1.5 | 50.9 | 2.22 | 3.5 | -152 | 1.4 |
| Comparative Example 2 | 88,232 | 164,706 | 1.9 | 49.5 | 2.48 | 2.8 | -138 | 5.6 |
| Comparative Example 3 | 80,764 | 161,065 | 2.0 | 32.9 | 1.60 | 15.7 | -104 | 16.8 |
| Comparative Example 4 | 47,669 | 80,371 | 1.7 | 1.7 | 0.45 | 263.2 | -11 | 46.3 |
| Comparative Example 5 | 134,666 | 236,148 | 1.8 | 51.1 | 2.57 | 3.1 | -145 | 3.4 |
| Comparative Example 6 | 116,380 | 216,354 | 1.9 | 55.6 | 2.68 | 3.6 | -154 | 0.8 |

**[Table 2]**

| | DSC | | | | | | | | |
|---|---|---|---|---|---|---|---|---|---|
| | PLA Tg (°C) | PLA Tc (°C) | PLA Tm (°C) | ΔH_{c, PLA} (J/g) | ΔH_{m, PLA} (J/g) | P3HP Tg (°C) | P3HP Tc (°C) | P3HP Tm (°C) | ΔHₘ, _{P3HP} (J/g) |
| Example 1 | 46.7 | 99.5 | 167.3 | 29.2 | 35.7 | -23.8 | N/D | N/D | N/D |
| Example 2 | 51.6 | N/D | 138.1 | N/D | 23.6 | -21.9 | N/D | 69.4 | 0.3 |
| Example 3 | 48.4 | N/D | 110.4 | N/D | 10.9 | -21.6 | N/D | 70.3 | 3.5 |
| Example 4 | 39.0 | N/D | N/D | N/D | N/D | -22.9 | N/D | 69.2 | 7.0 |
| Example 5 | 37.6 | N/D | N/D | N/D | N/D | -22.3 | N/D | 70.9 | 8.6 |
| Example 6 | 27.0 | 104 | 162 | N/A | N/A | N/A | N/D | N/D | N/D |
| Example 7 | 26.0 | N/D | 126 | N/D | 12.7 | -20.6 | N/D | 62.2 | 35.6 |
| Example 8 | 25.0 | N/D | N/D | N/D | N/D | -19.6 | N/D | 63.8 | N/A |
| Example 9 | 44.1 | 116.1 | 155.6 | 32.3 | 27.5 | N/D | N/D | N/D | N/D |
| Example 10 | 34.5 | N/D | N/D | N/D | N/D | -23.7 | N/D | N/D | N/D |
| Comparative Example 1 | 61.8 | 117.5 | 172.0 | 30.9 | 39.4 | | | | |
| Comparative Example 2 | 58.3 | N/D | 139.2 | N/D | 23.9 | | | | |
| Comparative | 56.7 | N/D | 120.9 | N/D | 11.1 | | | | |
| Example 3 | | | | | | | | | |
| Comparative Example 4 | 46.3 | N/D | N/D | N/D | N/D | | | | |
| Comparative Example 5 | 61.0 | N/D | 152.6 | N/D | 38.1 | | | | |
| Comparative Example 6 | 61.0 | N/D | 167.0 | N/D | 51.1 | | | | |

As shown in Tables 1 and 2, the poly(lactic acid-b-3-hydroxypropionic acid) block copolymer according to the present invention includes the repeating unit derived from meso-lactide represented by Formula 1 or the repeating unit derived from D-lactide represented by Formula 2 and the repeating unit derived from L-lactide represented by Formula 3 in the poly(lactic acid) repeating unit, and at the same time, poly(3-hydroxypropionic acid) repeating unit, thereby controlling the tensile properties of the block copolymer by controlling the optical purity in the poly(lactic acid) repeating unit, that is, by introducing the D-lactic unit.

With regard to the thermal properties of Table 2, as the content of the D-lactic unit increases due to the introduction of the optical isomer into the poly(lactic acid) repeating unit, the melting enthalpy of the poly(lactic acid) block gradually decreases, and the melting enthalpy of the poly(3-hydroxypropionic acid) block, which had been not observed, appeared, indicating that the crystallinity of the poly(lactic acid) block decreased and the crystallinity of the poly(3-hydroxypropionic acid) block increased. Therefore, the crystallinity of the poly(lactic acid) block, which contributed to the tensile strength, was decreased, and the tensile strength of the poly(lactic acid-b-3-hydroxypropionic acid) block copolymer was decreased, but the crystallinity of the poly(3-hydroxypropionic acid) block, which contributed to the tensile elongation, was increased, indicating that the tensile elongation of the poly(lactic acid-b-3-hydroxypropionic acid) block copolymer was significantly improved, as compared to the poly lactic acid homopolymer with the same optical purity. Accordingly, the poly(lactic acid-b-3-hydroxypropionic acid) block copolymer with controlled optical purity of the present invention has similar physical properties to poly(ethylene) with good tensile elongation, and thus its use may be extended to new application fields.

## Claims

1. A poly(lactic acid-b-3-hydroxypropionic acid) block copolymer comprising:
a poly(lactic acid) repeating unit; and
a poly(3-hydroxypropionic acid) repeating unit,
wherein the poly(lactic acid) repeating unit includes i) a repeating unit derived from a compound represented by the following Formula 1 or a repeating unit derived from a compound represented by the following Formula 2; and
ii) a repeating unit derived from a compound represented by the following Formula 3:

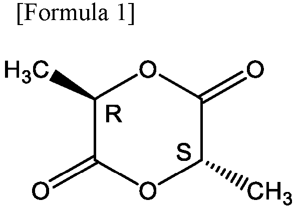

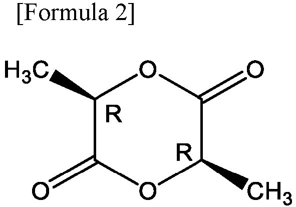

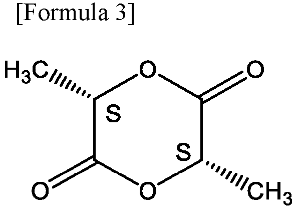

2. The poly(lactic acid-b-3-hydroxypropionic acid) block copolymer of claim 1, wherein the repeating unit derived from the compound represented by Formula 1 or the repeating unit derived from the compound represented by Formula 2 is included in an amount of 0.5 parts by weight to 99 parts by weight with respect to 100 parts by weight of the poly(lactic acid) repeating unit.

3. The poly(lactic acid-b-3-hydroxypropionic acid) block copolymer of claim 1, wherein the repeating unit derived from the compound represented by Formula 1 or the repeating unit derived from the compound represented by Formula 2 is included in an amount of 1 part by weight to 60 parts by weight with respect to 100 parts by weight of the poly(lactic acid) repeating unit.

4. The poly(lactic acid-b-3-hydroxypropionic acid) block copolymer of claim 1, wherein a weight average molecular weight of the poly(lactic acid-b-3-hydroxypropionic acid) block copolymer is 10,000 g/mol to 200,000 g/mol.

5. The poly(lactic acid-b-3-hydroxypropionic acid) block copolymer of claim 1, wherein a tensile strength according to ASTM D638 of the poly(lactic acid-b-3-hydroxypropionic acid) block copolymer is 1 MPa to 70 MPa.

6. The poly(lactic acid-b-3-hydroxypropionic acid) block copolymer of claim 1, wherein a tensile elongation according to ASTM D638 of the poly(lactic acid-b-3-hydroxypropionic acid) block copolymer is 5% to 1000%.

7. A method of preparing a poly(lactic acid-b-3-hydroxypropionic acid) block copolymer, the method comprising the steps of:
preparing a poly(3-hydroxypropionic acid) (step 1); and
preparing the block copolymer by performing a ring-opening polymerization of a lactide mixture in the presence of a poly(3-hydroxypropionic acid) initiator (step 2),
wherein the lactide mixture includes i) a compound represented by Formula 1 or a compound represented by Formula 2; and ii) a compound represented by Formula 3.

8. The method of claim 7, wherein a number average molecular weight of the poly(3-hydroxypropionic acid) of the step 1 is 1,000 g/mol to 40,000 g/mol.

9. The method of claim 7, wherein the compound represented by Formula 1 or the compound represented by Formula 2 is included in an amount of 0.5 parts by weight to 99 parts by weight with respect to 100 parts by weight of the lactide mixture.

10. The method of claim 7, wherein a weight ratio of the poly(3-hydroxypropionic acid) and the lactide mixture in the step 2 is 1:0.5 to 1:20.

11. The method of claim 7, wherein the polymerization reaction of the step 2 is performed in the presence of a lactide ring-opening catalyst.
